# EUROPÄISCHE PATENTSCHRIFT

(11) **EP 1 130 533 B1**
(45) Veröffentlichungstag und Bekanntmachung des Hinweises auf die Patenterteilung: **12.10.2005**
(21) Anmeldenummer: 01104379.1
(22) Anmeldetag: 23.02.2001
(51) Int. Cl.: G06K 7/10

(54) **Optischer Abtaster**
Scanner
Scanner

(30) Priorität: 29.02.2000 DE 10009493
(43) Veröffentlichungstag der Anmeldung: 05.09.2001
(73) Patentinhaber: SICK AG, 79183 Waldkirch (DE)
(72) Erfinder: Runge, Wolfram, Dr., 79104 Freiburg (DE)
(74) Vertreter: Manitz, Finsterwald & Partner GbR

(56) Entgegenhaltungen:
- EP-A- 0 962 880
- US-A- 5 532 467
- US-A- 5 754 670
- US-A- 5 834 753
- US-A- 6 019 286

## Beschreibung

Die Erfindung betrifft einen Scanner gemäß Oberbegriff des Anspruchs 1.

Ein solcher Scanner ist beispielsweise aus US-A-5 834 753 bekannt. Derartige aus dem Stand der Technik bekannte Scanner können beispielsweise als Linienscanner ausgebildet sein, um auf diese Weise Barcodes lesen zu können, ohne daß eine Relativbewegung zwischen Scanner und Code erfolgen muß. Ebenso können solche Scanner jedoch auch zum Lesen von zweidimensionalen Codes herangezogen werden, sofern beispielsweise mittels einer Förderbewegung eine Relativbewegung zwischen Scanner und Code erzeugt wird. Alternativ hierzu ist es zudem auch möglich, anstelle eines Linienscanners aus dem Stand der Technik bekannte Flächenscanner einzusetzen, welche zweidimensionale Codes ohne Relativbewegung zwischen Scanner und Code lesen können.

Bekannte, auf den vorstehend beschriebenen Funktionsprinzipien basierende Scanner weisen den Nachteil auf, daß infolge unzureichender oder wechselnder Lichtverhältnisse Codes oftmals nur unvollständig oder fehlerhaft oder im Extremfall überhaupt nicht erkannt werden können.

Eine Aufgabe der vorliegenden Erfindung besteht darin, einen Scanner der eingangs genannten Art derart weiterzubilden, daß durch unzureichende oder wechselnde Lichtverhältnisse bedingte Lesefehler zumindest weitgehend, insbesondere vollständig ausgeschlossen werden können.

Diese Aufgabe wird erfindungsgemäß durch einen Scanner nach Anspruch 1 gelöst.

Dadurch, daß der Scanner eine eigene Lichtquelle besitzt, welche für eine optimale Ausleuchtung des zu scannenden Bereichs bzw. des zu lesenden Codes sorgt, wird der Einfluß der Umgebungslichtverhältnisse zumindest weitgehend eliminiert, was bedeutet, daß die Codes auch in dunkler Umgebung oder in einer Umgebung mit wechselnden Lichtverhältnissen zuverlässig und korrekt erkannt werden können.

Bevorzugt ist es, wenn die Lichtquelle dabei zur Aussendung von Gleichlicht ausgelegt ist, so daß eine kontinuierliche und während des Lesevorgangs gleichbleibende Ausleuchtung des Codes sichergestellt werden kann.

Von Vorteil ist es ferner, wenn die Lichtquelle von zumindest einer Laserdiode gebildet ist, da eine solche punktförmige Lichtquelle eine gute Strahlformung ermöglicht.

Bevorzugt ist es, wenn der Lichtquelle eine Sendeoptik zugeordnet ist, welche ein von der Lichtquelle ausgesandtes, im wesentlichen homozentrisches Lichtbündel in einen im wesentlichen linienförmigen, auf die Gegenstandsebene fokussierten Lichtstrahl transformiert. Durch diese Maßnahme wird beim Einsatz des erfindungsgemäßen Scanners als Linienscanner erreicht, daß zumindest ein Großteil der von der Lichtquelle ausgesandten Lichtenergie auf die vom Scanner jeweils zu lesende Linie konzentriert wird, so daß die zu scannende Linie optimal ausgeleuchtet ist.

Die Sendeoptik besteht bevorzugt aus refraktiven, diffraktiven und/oder holographischen Elementen.

Die Intensität des linienförmigen Lichtstrahls kann entlang der ausgeleuchteten Linie einen gaußförmigen Verlauf besitzen. In diesem Fall kann bei Vorsehung mehrerer Lichtquellen durch eine geschickte Überlappung von miteinander ausgerichteten Linien erreicht werden, daß ein vergleichsweise großer Linienbereich konstant beleuchtet wird.

Um unterschiedliche Abstände zwischen Scanner und Gegenstandsebene, d. h. unterschiedliche Leseabstände und/oder unterschiedliche Codegrössen einstellen zu können, ist die Lichtquelle und die Empfangsoptik beweglich im Gehäuse gehalten und in verschiedenen Positionen justierbar. Dabei ist es besonders vorteilhaft, wenn die Bewegungen von Lichtquelle und Empfangsoptik mechanisch miteinander korreliert sind, so daß der Benutzer beispielsweise lediglich eine Stellschraube betätigen muß, um Lichtquelle und Empfangsoptik gleichzeitig und derart aufeinander abgestimmt zu bewegen, daß einerseits die Empfangsoptik auf die Abtastebene fokussiert ist und andererseits eine optimale Ausleuchtung des zu scannenden Bereichs der Abtastebene sichergestellt ist.

Um die genannten Einstellmöglichkeiten zu realisieren, kann die Empfangsoptik entlang ihrer optischen Achse verschiebbar sein. Weiterhin kann die Lichtquelle in einer ersten Ebene verschwenkbar ausgebildet werden, welche sich zumindest im wesentlichen parallel zu den optischen Achsen der Sende- und der Empfangsoptik erstreckt. Durch diese beiden Einstellmöglichkeiten ist es bereits möglich, den erfindungsgemäßen Scanner an verschiedene Leseabstände und unterschiedlich Codegrößen anzupassen.

Zudem ist es jedoch auch noch möglich, die Lichtquelle in einer zu der genannten ersten Ebene im wesentlichen senkrechten zweiten Ebene verschwenkbar auszubilden, wobei diese zweite Ebene die optische Achse der Sendeoptik beinhaltet. Durch diese Verstellmöglichkeit wird erreicht, daß beispielsweise bei Aussendung eines linienförmigen Lichtstrahls dieser in der Abtastebene senkrecht zu der in der Abtastebene erzeugten Lichtlinie justiert und insbesondere mit einer weiteren Lichtlinie ausgerichtet werden kann.

Besonders bevorzugt ist es, wenn im Gehäuse des erfindungsgemäßen Scanners zwei, mit ihren optischen Achsen winklig zueinander angeordnete Einheiten aus je einer Lichtquelle und je einer Sendeoptik vorgesehen sind. Durch die Vorsehung von zwei oder mehreren Lichtquellen läßt sich eine noch bessere Ausleuchtung des zu scannenden Bereichs erreichen.

Eine Ausführungsform der Erfindung mit zwei, jeweils einen linienförmigen Lichtstrahl erzeugende Lichtquellen wird nachfolgend im Rahmen der Figurenbeschreibung noch näher erläutert.

Der Lichtempfänger kann als ortsauflösender Detektor, insbesondere als CCD-Linie, CCD-Fläche, CMOS-Linie oder CMOS-Fläche ausgebildet werden.

Weitere bevorzugte Ausführungsformen sind in den Unteransprüchen beschrieben. Die Erfindung wird nachfolgend anhand eines Ausführungsbeispiels unter Bezugnahme auf die Figuren erläutert; in diesen zeigen:
- Fig. 1: eine Draufsicht auf einen erfindungsgemäßen Scanner mit abgenommenem Gehäusedeckel, in welchem die für die Erfindung wesentlichen Bauteile schematisch dargestellt sind, und
- Fig. 2: eine Seitenansicht des Scanners gemäß Fig. 1 mit aufgesetztem Gehäusedeckel.

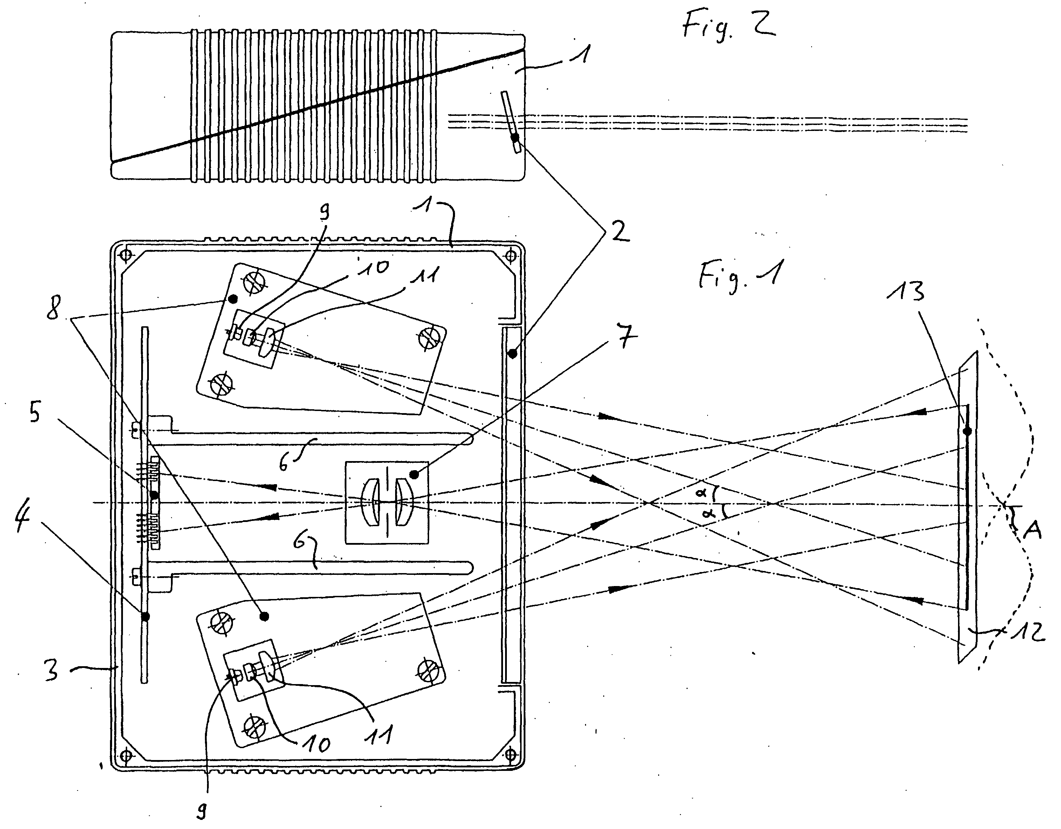

Der erfindungsgemäße Scanner gemäß Fig. 1 besitzt ein im wesentlichen rechteckiges Gehäuse 1, welches auf einer seiner längeren Schmalseiten eine Aufnahme für ein Fenster 2 besitzt, welches zur Vermeidung von Störreflexionen schräggestellt ist. Diese Schrägstellung ist insbesondere aus Fig. 2 ersichtlich.

Im Bereich der dem Fenster 2 gegenüberliegenden Schmalseite 3 des Gehäuses 1 ist parallel ausgerichtet zu dieser Schmalseite 3 eine Platine 4 montiert, auf welcher ein Lichtempfänger bzw. Sensor 5 angeordnet ist. Die Platine 4 ist dabei mit zwei sich senkrecht zu ihr erstreckenden Stegen 6 verschraubt, die ihrerseits beispielsweise Bestandteil des Gehäuses 1 sein und gemeinsam mit dem Gehäuse in einem einzigen Spritzvorgang hergestellt werden können. Die Stege 6 erstrecken sich über einen Großteil der Gehäusebreite und auch über einen Großteil der sich senkrecht zur Zeichenebene gemäß Fig. 1 erstreckenden Gehäusedicke, um so eine optische Trennung zwischen Lichtempfänger 5 und den nachstehend noch erläuterten Lichtempfängern herzustellen. Diese optische Trennung kann natürlich dadurch optimiert werden, daß sich die Stege 6 im Inneren des Gehäuses 1 über die gesamt Gehäusedicke erstrecken.

Zwischen den beiden Stegen 6 und zwischen dem Lichtempfänger 5 und dem Fenster 2 ist ein Empfangsobjektiv 7 angeordnet, welches entlang seiner optische Achse A beweglich und an unterschiedlichen Positionen justierbar im Gehäuse 1 gehalten ist. Dem Objektiv 7 kann optional ein nicht dargestelltes Bandpaß-Filter vor- oder nachgeordnet werden, um so aus dem empfangenen Licht die jeweils interessierenden Frequenzen herausfiltern zu können.

Außerhalb des von den beiden Stegen 6 begrenzten Bereichs sind zu beiden Seiten der optischen Achse A jeweils ein Trägerelement 8 vorgesehen, auf dem jeweils eine Laserdiode 9, eine Kollimatorlinse 10 und eine Zylinderlinse 11 angeordnet sind. Die Zylinderlinse 11 besitzt dabei jeweils die Funktion, das von der Laserdiode 9 ausgestrahlt und durch die Kollimatorlinse 10 hindurchgetretene Licht von einem punktförmig fokussierten Lichtstrahl in einen linienförmig fokussierten Lichtstrahl zu transformieren. Dabei sind die von den beiden Einheiten 9, 10, 11 ausgesandten linienförmigen Lichtstrahlen bzw. Lichtstriche miteinander ausgerichtet und einander überlappend auf eine Abtastebene 12 fokussiert, innerhalb derer sich ein zu lesender Code 13 befindet. Auch das Objektiv 7 ist auf diese Abtastebene 12 fokussiert.

Die Intensität jedes Lichtstriches besitzt entlang der jeweils ausgeleuchteten Linie bei beiden Lichtstrahlen jeweils einen gaußförmigen Verlauf, wie dies in Fig. 1 gestrichelt eingezeichnet ist. Die Überlappung der beiden Lichtstriche ist dabei derart gewählt, daß sich über die Gesamtlänge des gemeinsam erzeugten ausgeleuchteten Lichtstriches durch die Addition der beiden gaußförmigen Energieverläufe eine im wesentlichen energetisch konstante Beleuchtung ergibt.

Die beiden Trägerelemente 8 sind derart im Gehäuse 1 gelagert, daß sie in einer parallel zur Zeichenebene der Fig. 1 und damit auch parallel zu den optischen Achsen der Sendeoptik 10, 11 und des Empfangsobjektivs 7 verlaufenden Ebene verschwenkbar sind. Durch diese Verschwenkung läßt sich der Winkel α zwischen der optischen der Achse des Empfangsobjektivs 7 und den optischen Achsen der Sendeoptiken 10, 11 verstellen, so daß letztlich unterschiedliche Abstände zwischen Gehäuse 1 und Gegenstandsebene 12 eingestellt werden können.

Zudem können die Trägerelemente 8 in einer senkrecht zur Zeichenebene verlaufenden Ebene verschwenkbar sein, welche jeweils die optische Achse der Sendeoptik 10, 11 enthält, um die beiden erzeugten Lichtstriche miteinander auszurichten. Durch diese Justagemöglichkeit kann auch sichergestellt werden, daß die beleuchtete Linie in der Abtastebene 12 mit derjenigen Linie zusammenfällt, die durch das Objektiv 7 auf den Lichtempfänger 5 abgebildet wird. Eine zusätzliche Möglichkeit zur Ausrichtung der beiden erzeugten Lichtstriche kann dadurch erhalten werden, daß die Trägerelemente 8 auch noch jeweils um die optischen Achsen ihrer jeweiligen Sendeoptik 10, 11 rotierbar gelagert werden.

Somit wird durch die Anordnung gemäß der Fig. 1 und 2 ein Scanner bereitgestellt, welcher einen zu lesenden Code aktiv mit einem über seine Länge energetisch weitgehend konstanten Lichtstrich beleuchtet, so daß ein problemloses Lesen des Codes über das Empfangsobjektiv 7 möglich wird.

### Bezugzeichenliste

- 1: Gehäuse
- 2: Fenster
- 3: Schmalseite
- 4: Platine
- 5: Lichtempfänger
- 6: Stege
- 7: Empfangsobjektiv
- 8: Trägerelement
- 9: Laserdiode
- 10: Kollimatorlinse
- 11: Zylinderlinse
- 12: Gegenstands- bzw. Abtastebene
- 13: Code

## Patentansprüche

1. Scanner, insbesondere zur Erfassung von ein- und/oder zweidimensionalen Codes (13), mit einem in einem Gehäuse (1) angeordneten Lichtempfänger (5) und einer diesem zugeordneten, ebenfalls im Gehäuse (1) untergebrachten Empfangsoptik (7), die zur Einstellung unterschiedlicher Abstände zwischen Scanner und Abbildungsebene (12) und/oder unterschiedlicher Codegrößen beweglich im Gehäuse (1) gehalten und in verschiedenen Positionen justierbar ist, wobei im Gehäuse (1) zusätzlich zumindest eine Lichtquelle (9) zur Ausleuchtung des in einer Abtastebene (12) angeordneten zu scannenden Bereichs vorgesehen ist,
**dadurch gekennzeichnet,**
**dass** auch die Lichtquelle (9) zur Einstellung unterschiedlicher Abstände zwischen Scanner und Abbildungsebene (12) und/ oder unterschiedlicher Codegrößen beweglich im Gehäuse (1) gehalten und in verschiedenen Positionen justierbar ist.

2. Scanner nach Anspruch 1,
**dadurch gekennzeichnet,**
**daß** die Lichtquelle (9) zur Aussendung von Gleichlicht ausgelegt ist.

3. Scanner nach einem der vorhergehenden Ansprüche,
**dadurch gekennzeichnet,**
**daß** die Lichtquelle (9) von zumindest einer Laserdiode gebildet ist.

4. Scanner nach einer der vorhergehenden Ansprüche,
**dadurch gekennzeichnet,**
**daß** der Lichtquelle (9) eine Sendeoptik (10, 11) zugeordnet ist, welche ein im wesentlichen homozentrisches Lichtbündel in einen im wesentlichen linienförmigen, auf die Gegenstandsebene (12) fokussierten Lichtstrahl transformiert.

5. Scanner nach Anspruch 4,
**dadurch gekennzeichnet,**
**daß** die Intensität des linienförmigen Lichtstrahls entlang der ausgeleuchteten Linie weitgehend konstant ist.

6. Scanner nach einem der vorhergehenden Ansprüche,
**dadurch gekennzeichnet,**
**daß** die Sendeoptik (10,11) aus refraktiven, diffraktiven und/oder holographischen Elementen besteht.

7. Scanner nach einem der vorhergehenden Ansprüche,
**dadurch gekennzeichnet,**
**daß** die Bewegungen von Lichtquelle (9) und Empfangsoptik (7) mechanisch miteinander korreliert sind.

8. Scanner nach einem der vorhergehenden Ansprüche,
**dadurch gekennzeichnet,**
**daß** die Empfangsoptik (7) entlang ihrer optischen Achse (A) verschiebbar ist.

9. Scanner nach einem der vorhergehenden Ansprüche,
**dadurch gekennzeichnet,**
**daß** die Lichtquelle (9) in einer ersten Ebene verschwenkbar ist, die sich zumindest im wesentlichen parallel zu den optischen Achsen der Sende- und der Empfangsoptik (7, 10, 11) erstreckt.

10. Scanner nach Anspruch 9,
**dadurch gekennzeichnet,**
**daß** die Lichtquelle (9) in einer zur ersten Ebene im wesentlichen senkrechten zweiten Ebene verschwenkbar ist, die die optische Achse der Sendeoptik (10, 11) beinhaltet.

11. Scanner nach einem der vorhergehenden Ansprüche,
**dadurch gekennzeichnet,**
**daß** im Gehäuse (1) zwei, mit ihren optischen Achsen winklig zueinander angeordnete Einheiten aus je einer Lichtquelle (9) und einer Sendeoptik (10, 11) vorgesehen sind.

12. Scanner nach Anspruch 11,
**dadurch gekennzeichnet,**
**daß** die beiden Lichtquellen (9) derart zueinander und zur Empfangsoptik (7) justierbar sind, daß sie aneinander angrenzende oder einander überlappende, miteinander ausgerichtete Linienbereiche in der Abbildungsebene ausleuchten.

13. Scanner nach einem der vorhergehenden Ansprüche,
**dadurch gekennzeichnet,**
**daß** der Lichtempfänger (5) als CCD-Linie, CCD-Fläche oder CMOS-Linie oder CMOS-Fläche ausgebildet ist.

## Claims

1. A scanner, in particular for the detection of one-dimensional and/or two-dimensional codes (13), having a light receiver (5) arranged in a housing (1) and an optical receiving system (7) which is associated therewith and is also accommodated in the housing (1) and which is movably held in the housing (1) to set different distances between the scanner and the image plane (12) and/or different code sizes and is adjustable into different positions, with at least one light source (9) being additionally provided in the housing (1) to illuminate the region to be scanned which is arranged in a scan plane (12).
**characterized in that**
the light source (9) is also movably held in the housing (1) to set different distances between the scanner and the image plane (12) and/or different code sizes and is adjustable into different positions

2. A scanner in accordance with claim 1, **characterized in that** the light source (9) is designed to transmit a constant light intensity.

3. A scanner in accordance with any one of the preceding claims, **characterized in that** the light source (9) is formed by at least one laser diode.

4. A scanner in accordance with any one of the preceding claims, **characterized in that** an optical transmitting system (10, 11) is associated with the light source (9) and transforms a substantially homocentric light bundle into a substantially linear light beam focused on the object plane (12).

5. A scanner in accordance with claim 4, **characterized in that** the intensity of the linear light beam along the illuminated line is largely constant.

6. A scanner in accordance with any one of the preceding claims, **characterized in that** the optical transmitting system (10, 11) consists of refractive, diffractive and/or holographic elements.

7. A scanner in accordance with any one of the preceding claims, **characterized in that** the movements of the light source (9) and the optical receiving system (7) are mechanically correlated with one another.

8. A scanner in accordance with any one of the preceding claims, **characterized in that** the optical receiving system (7) is displaceable along its optical axis (A).

9. A scanner in accordance with any one of the preceding claims, **characterized in that** the light source (9) is pivotable in a first plane which extends at least substantially parallel to the optical axes of the optical transmission and the optical receiving systems (7, 10, 11).

10. A scanner in accordance with claim 9, **characterized in that** the light source (9) is pivotable in a second plane substantially perpendicular to the first plane which includes the optical axis of the optical transmitting system (10, 11).

11. A scanner in accordance with any one of the preceding claims, **characterized in that** two units are provided in the housing (1), each comprising one light source (9) and one optical transmitting system (10, 11), with their optical axes positioned at an angle to one another.

12. A scanner in accordance with claim 11, **characterized in that** the two light sources (9) are adjustable with respect to each other and with respect to the optical receiving system (7) such that they illuminate line regions in the image plane which are aligned to one another and which are adjacent to one another or overlap one another.

13. A scanner in accordance with any one of the preceding claims, **characterized in that** the light receiver (5) is made as a CCD row, a CCD area, or a CMOS row or a CMOS area.

## Revendications

1. Scanneur destiné notamment à la saisie de codes (13) à une et/ou à deux dimensions, comportant un récepteur de lumière (5) disposé dans un boîtier (1), et une optique de réception (7) associée à celui-ci, également disposée dans le boîtier (1) qui, pour le réglage de différents écartements entre le scanneur et le plan de reproduction (12) et/ou de codes de différentes tailles, est retenue de façon mobile dans le boîtier (1) et peut être ajustée dans différentes positions, au moins une source lumineuse (9) étant prévue de façon supplémentaire dans le boîtier (1) pour l'éclairage de la zone à scanner située dans un plan de balayage (12),
**caractérisé en ce que**,
pour le réglage de différents écartements entre le scanneur et le plan de reproduction (12) et/ou de codes de différentes tailles, la source lumineuse (9) est également retenue de façon mobile dans le boîtier (1), et peut être ajustée dans différentes positions.

2. Scanneur selon la revendication 1,
**caractérisé en ce que**
la source lumineuse (9) est conçue pour l'émission de lumière constante.

3. Scanneur selon l'une des revendications précédentes,
**caractérisé en ce que**
la source lumineuse (9) est constituée d'au moins une diode laser.

4. Scanneur selon l'une des revendications précédentes,
**caractérisé en ce que**
une optique d'émission (10, 11) est associée à la source lumineuse (9), qui transforme un faisceau lumineux sensiblement homocentrique en un rayon lumineux sensiblement linéaire focalisé sur le plan d'objet (12).

5. Scanneur selon la revendication 4,
**caractérisé en ce que**
l'intensité du rayon lumineux linéaire est dans une large mesure constante le long de la ligne éclairée.

6. Scanneur selon l'une des revendications précédentes,
**caractérisé en ce que**
l'optique d'émission (10, 11) est constituée d'éléments de réfraction, de diffraction et/ou holographiques.

7. Scanneur selon l'une des revendications précédentes,
**caractérisé en ce que**
les mouvements de la source lumineuse (9) et de l'optique de réception (7) sont corrélés mécaniquement entre eux.

8. Scanneur selon l'une des revendications précédentes,
**caractérisé en ce que**
l'optique de réception (7) peut être déplacée le long de son axe optique (A).

9. Scanneur selon l'une des revendications précédentes,
**caractérisé en ce que**
la source lumineuse (9) peut être pivotée dans un premier plan qui s'étend, au moins pour l'essentiel, parallèlement aux axes optiques des optiques d'émission et de réception (7, 10, 11).

10. Scanneur selon la revendication 9,
**caractérisé en ce que**
la source lumineuse (9) peut pivoter dans un deuxième plan sensiblement perpendiculaire au premier plan, ce deuxième plan contenant l'axe optique de l'optique d'émission (10, 11).

11. Scanneur selon l'une des revendications précédentes,
**caractérisé en ce que**,
dans le boîtier (1) sont prévues deux unités, constituées chacune d'une source lumineuse (9) et d'une optique d'émission (10, 11), qui sont disposées selon un angle l'une par rapport à l'autre avec leurs axes optiques.

12. Scanneur selon la revendication 11,
**caractérisé en ce que**
les deux sources lumineuses (9) peuvent être ajustées l'une par rapport à l'autre, et par rapport à l'optique de réception (7), de telle sorte qu'elles éclairent des zones linéaires adjacentes les unes aux autres ou se chevauchant, qui sont orientées les unes vers les autres dans le plan de reproduction.

13. Scanneur selon l'une des revendications précédentes,
**caractérisé en ce que**
le récepteur de lumière (5) est agencé sous la forme d'une ligne CCD, d'une surface CCD ou d'une ligne CMOS ou d'une surface CMOS.
